## Europäisches Patentamt
## European Patent Office
## Office européen des brevets

(11) Veröffentlichungsnummer: **0 176 699**
**A1**

(12) # EUROPÄISCHE PATENTANMELDUNG

(21) Anmeldenummer: **85109760.0**

(22) Anmeldetag: **02.08.85**

(51) Int. Cl.⁴: **B 65 G 51/32**

(30) Priorität: **27.09.84 DE 3435500**

(43) Veröffentlichungstag der Anmeldung:
**09.04.86 Patentblatt 86/15**

(84) Benannte Vertragsstaaten:
**BE CH FR GB IT LI LU NL SE**

(71) Anmelder: **Lang + Schiller GmbH**
**Wilhelmstrasse 2**
**D-7314 Wernau(DE)**

(72) Erfinder: **Lang, Hartmut**
**Wilhelmstrasse 2**
**D-7314 Wernau(DE)**

(74) Vertreter: **Patentanwälte Kohler - Schwindling - Späth**
**Hohentwielstrasse 41**
**D-7000 Stuttgart 1(DE)**

(54) **Rohrpoststation.**

(57) Eine Rohrpoststation verfügt über ein Gehäuse mit einer oberen Abschlußwand (106) und einer unteren Abschlußwand (104), die jeweils mit Rohrstutzen (107, 114) und/oder Prallplatten versehen sind. Ein eim Gehäuse um eine senkrecht Achse drehbares Drehteil weist einen gebogenen Rohrabschnitt (117) auf, mit dem bei Drehung des Drehteiles wahlweise Rohrstutzen (107) der oberen Abschlußwand (106) mit Rohrstutzen (114) und/oder Prallplatten der unteren Abschlußwand (104) verbindbar sind.

Die obere Abschlußwand (106) ist mit nur einem koaxial zur Achse (108) angeordneten Rohrstutzen (107) versehen, an den mittels einer Drehkupplung (118) der gebogene Rohrabschnitt (117) des Drehteiles axial fest angeschlossen ist. Die Rohrstutzen (114) und/oder Prallplatten der unteren Abschlußwand (1049 sind auf einem Kreis angeordnet, dessen Mittelpunkt im Schnittpunkt der Achse (108) mit der unteren Abschlußplatte (104) liegt.

./...

Croydon Printing Company Ltd.

EP 0 176 699 A1

Fig. 12

1

Anmelder:

Lang + Schiller GmbH
Wilhelmstraße 2
7314 Wernau

Stuttgart, 26.06.1985

P 4573 EP  W-ef

Vertreter:

Kohler - Schwindling - Späth
Patentanwälte
Hohentwielstraße 41
7000 Stuttgart 1

## Rohrpoststation

Die Erfindung betrifft eine Rohrpoststation mit einem Gehäuse, das eine obere Abschlußwand und eine untere Abschlußwand aufweist, die jeweils mit Rohrstutzen und/oder Prallplatten versehen sind und mit einem im Gehäuse um eine die obere und die untere Abschlußwand senkrecht schneidende Achse drehbaren Drehteil, das einen gebogenen Rohrabschnitt aufweist, mit dem bei Drehung des Drehteiles wahlweise Rohrstutzen der oberen Abschlußwand mit Rohrstutzen und/oder Prallplatten der unteren Abschlußwand verbindbar sind.

Eine derartige Rohrpoststation ist aus der DE-OS 30 09 345 bekannt.

Bei der bekannten Rohrpoststation ist die obere Abschlußwand mit zwei Rohrstutzen versehen, von denen die eine mit dem Fahrrohr einer Rohrpostanlage und die andere mit einem Speicher verbunden ist, über den Rohrpostbüchsen in die Rohrpostanlage eingefahren werden können.

Die untere Abschlußwand weist einen mit dem ersten Stutzen fluchtenden Stutzen auf, der mit der anderen Seite des Fahrrohres verbunden ist, und an der mit dem Speicherstutzen fluchtenden Position ist entweder eine Prallplatte oder ein weiterer Stutzen angeordnet, der zu einem Auswerfkorb führt.

Zwischen den Abschlußwänden ist ein um eine Hochachse drehbares Drehteil angeordnet, das mit einer oberen und einer unteren Endscheibe versehen ist. Die Endscheiben sind über zwei Rohrabschnitte miteinander verbunden, von denen der eine parallel zur Hochachse und gerade verläuft, während der andere gekrümmt verläuft und eine obere Öffnung des Drehteiles mit einer unteren Öffnung verbindet, die um den Abstand gegeneinander versetzt sind, der dem Abstand der beiden an der oberen Abschlußwand bzw. unteren Abschlußwand angeordneten Stutzen entspricht.

Durch Drehen des Drehteiles kann nun mittels des geraden Rohrabschnittes das Fahrrohr vom oberen Stutzen zum unteren Stutzen in Durchgangsposition miteinander verbunden werden, während durch geeignetes Verdrehen mittels des gekrümmten Rohrabschnittes entweder der obere Fahrrohrstutzen mit der unteren Prallplatte zum Abbremsen einer ankommenden Büchse oder mit dem statt der Prallplatte vorgesehenen unteren Auswerfrohr verbunden werden kann, um eine Büchse auszuwerfen. Weiterhin kann mittels des gekrümmten Rohres der obere Speicherstutzen mit dem unteren Fahrrohrstutzen verbunden werden.

Aus dieser Erläuterung wird schon deutlich, daß ein Nachteil der bekannten Rohrpoststation darin besteht, daß das Abbremsen ankommender Büchsen mittels einer Prallplatte nur alternativ zum Auswerfen der Büchsen möglich ist, weil die entsprechende Position der unteren Abschlußwand im einen Fall mit einer Prallplatte und im anderen Fall mit einem Stutzen versehen sein muß. Außerdem hat die bekannte Rohrpoststation den Nachteil, daß Rohrpostbüchsen nur von oben, nämlich vom Speicherstutzen aus, eingefahren werden können, weil die Büchsen dann durch Schwerkrafteinfluß in den Bereich des Fahrrohres gelangen, während eine Büchseneinfuhr von unten nicht möglich ist. Ein weiterer Nachteil der bekannten Rohrpoststation besteht darin, daß zwei unterschiedliche Rohre für das Drehteil verwendet werden müssen, wodurch sich unterschiedliche Fahreigenschaften in den verschiedenen Stellungen des Drehteiles ergeben, außerdem sind Gleitdichtungen an beiden Stirnseiten des Drehteiles erforderlich, weil jeweils das Ende der Rohrabschnitte zur Seite weg von den zugehörigen Stutzen bzw. Prallplatten weg verschoben und druckdicht in die gewünschte neue Position zu einem anderen Stutzen oder Prallplatte gebracht werden müssen. Schließlich ist die bekannte Rohrpoststation bestimmungsgemäß auf die geringe Zahl von Stellungen beschränkt.

Der Erfindung liegt demgegenüber die Aufgabe zugrunde, eine Rohrpoststation der eingangs genannten Art dahingehend weiterzubilden, daß die erwähnten Nachteile vermieden werden.

Zum einen sollen die Dichtungsprobleme reduziert werden, um Leckverluste und Geräusche beim Verfahren des Drehteiles zu reduzieren.

Zum anderen soll die Rohrführung möglichst einheitlich sein, um in allen Positionen des Drehteiles gleiche Durchfahrbedingungen zu gewährleisten.

Weiterhin soll möglichst die Anzahl der Schaltstellungen des Drehteiles erhöht werden, damit alle Positionen Durchfahren/Einfahren/Auswerfen mit ein und derselben Rohrpoststation dargestellt werden können.

Schließlich soll auch eine Betriebsweise möglich sein, bei der Büchsen von unten in die Station eingesaugt werden können.

Diese Aufgabe wird erfindungsgemäß dadurch gelöst, daß die obere Abschlußwand mit nur einem koaxial zur Achse angeordneten Rohrstutzen versehen ist, an den mittels einer Drehkupplung der Rohrabschnitt des Drehteiles axial fest angeschlossen ist und daß die Rohrstutzen und/oder Prallplatten der unteren Abschlußwand auf einem Kreis angeordnet sind, dessen Mittelpunkt im Schnittpunkt der Achse mit der unteren Abschlußplatte liegt.

Diese Merkmale lösen die der Erfindung zugrundeliegenden Aufgaben vollkommen.

Zum einen wird nämlich über die obere Drehkupplung das Dichtungsproblem vermindert, weil eine Gleitdichtung im Bereich der oberen Abschlußwand nicht mehr erforderlich ist.

Zum anderen wird durch den lediglich einen Rohrabschnitt gewährleistet, daß in allen Positionen gleiche Durchfahrbedingungen herrschen.

Die Anordnung der Rohrstutzen und/oder Prallplatten auf einem Kreis gewährleistet weiterhin, daß eine Vielzahl von Umfangspositionen mit Stutzen und/oder Prallplatten belegt werden kann, so daß die Funktionen der Rohrpoststation außerordentlich vielfältig gestaltet werden können.

Weitere Vorteile ergeben sich aus der Beschreibung und der beigefügten Zeichnung.

Verschiedene Ausführungsbeispiele der Erfindung sind in der Zeichnung dargestellt und werden in der nachfolgenden Beschreibung näher erläutert. Es zeigen:

Fig. 1     ein Gehäuse einer bekannten Rohrpoststation;

Fig. 2     ein Drehteil zum Gehäuse gemäß Fig. 1;

Fig. 3     eine andere bekannte Rohrpoststation;

Fig. 4     eine schematische Ansicht einer weiteren bekannten Rohrpoststation zur Erläuterung des Problems

6

0176699

beim Einfahren von Büchsen "von unten";

Fig. 5      ein Blockschaltbild einer Rohrpostanlage;

Fig. 6      ein Gehäuse einer ersten Ausführungsform einer
            erfindungsgemäßen Rohrpoststation;

Fig. 7      ein Drehteil zum Gehäuse nach Fig. 6;

Fig. 8      eine Dichtung, wie sie beim Ausführungsbeispiel
            gemäß Fig. 6 und 7 verwendet wird;

Fig. 9      ein Gehäuse einer zweiten Ausführungsform einer
            erfindungsgemäßen Rohrpoststation;

Fig. 10     ein Drehteil zum Gehäuse nach Fig. 9;

Fig. 11     eine Dichtung, wie sie beim Ausführungsbeispiel
            gemäß Fig. 9 und 10 Verwendung finden kann.

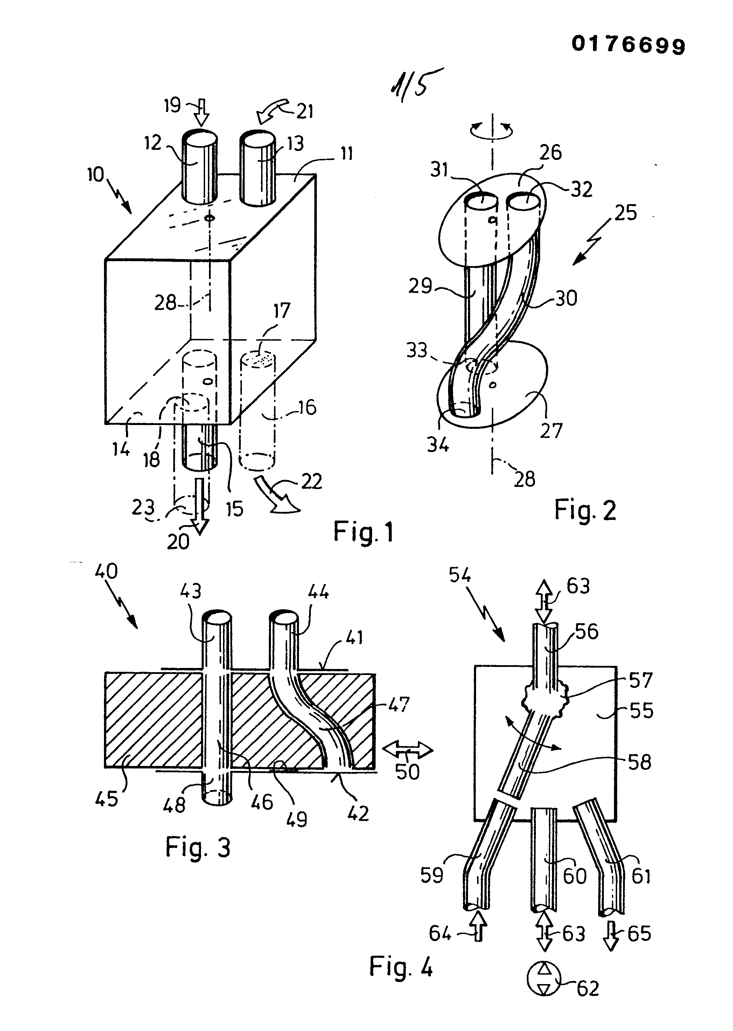

In Fig. 1 ist mit 10 eine bekannte Rohrpoststation bezeichnet. Eine obere Abschlußwand 11 ist mit zwei Stutzen 12 und 13 versehen. In entsprechender Weise weist eine untere Abschlußwand 14 einen Stutzen 15, sowie ggf. einen weiteren Stutzen 16 oder, anstelle des Stutzens 16, eine Prallplatte 17 auf. Es fluchten dabei die Stutzen 12, 15 einerseits und die Stutzen 13/16 bzw. Prallplatte 17 andererseits.

Die Stutzen 12, 15 stehen mit einem Fahrrohr einer Rohrpost-anlage in Verbindung, während der Stutzen 13 zu einem Speicher einer Einfahrposition führt und der Stutzen 16 zu einer Ausfahrposition, beispielsweise einem Auffangkorb führen kann.

Fig. 2 zeigt ein Drehteil 25, das in das Gehäuse der Rohrpoststation 10 eingesetzt wird. Es verfügt über eine obere Drehplatte 26 und eine untere Drehplatte 27, die senkrecht zu einer Hochachse 28 verlaufen. Die zwei Drehplatten 26, 27 sind über zwei Rohrabschnitte verbunden, und zwar über einen geraden Rohrabschnitt 29 sowie einen gebogenen Rohrabschnitt 30. Die Durchtrittsöffnungen 31, 32 in der oberen Drehplatte 26 haben zueinander denselben Abstand wie die Stutzen 12, 13 in Fig. 1. Dasselbe gilt für die unteren Durchtrittsöffnungen 33, 34, deren Verbindungslinie gegenüber der Verbindungslinie der oberen Durchtrittsöffnungen 31, 32 jedoch um 60° versetzt ist.

Man erkennt leicht, daß man durch geeignete Drehung des Drehteiles 25 um die Achse 28 mit dem geraden Rohrabschnitt 29 die Stutzen 12, 15 miteinander verbinden kann, so daß Rohrpostbüchsen entlang der Pfeile 19, 20 durch die Station 10 hindurchfahren können.

Man kann mit dem geraden Rohrabschnitt 29 auch Büchsen entlang der Richtung des Pfeiles 21 in den Stutzen 13 einfahren und auf der Prallplatte 17 aufsetzen lassen, wonach das Drehteil 25 so verschoben wird, daß der gerade Rohrabschnitt 29 wieder mit den Stutzen 12 und 15 fluchtet, so daß die soeben eingefahrene Büchse in die Rohrpostanlage übernommen werden kann.

Mit dem gebogenen Rohrabschnitt 30 kann beispielsweise eine aus Richtung des Pfeiles 19 einfahrende Büchse unmittelbar durch den Stutzen 16 entlang des Pfeiles 22 ausgeworfen werden, man kann sie aber auch zunächst auf der Prallplatte 17 abbremsen, das Drehteil 25 dann verdrehen und die Büchse dann über einen weiteren Stutzen 23 an einer Position 18 der unteren Abschlußwand 14 auswerfen, die mit den Stutzen 15, 16 entlang den Spitzen eines gleichseitigen Dreiecks angeordnet ist.

Man erkennt aus der vorstehenden Schilderung leicht, daß je nach angeordneten Stutzen und/oder Prallplatten immer nur eine bestimmte Art von Funktionen ausgeführt werden kann und daß die Anzahl der Anschlüsse systematisch begrenzt ist.

Fig. 3 zeigt eine weitere bekannte Rohrpoststation 40 in kastenartiger Bauweise mit einer oberen Abschlußwand 41 und einer unteren Abschlußwand 42, bei der die obere Abschlußwand 41 mit nebeneinander liegenden Stutzen 43, 44 versehen ist. Zwischen den Abschlußwänden 41, 42 ist ein Schieber 45 entlang der Richtung eines Doppelpfeiles 50 verschiebbar angeordnet. Der Schieber 45 weist ein gerades Rohr 46 und ein gebogenes Rohr 47 auf. Die untere Abschlußwand 42 ist mit einem Stutzen 48 versehen, der mit dem Stutzen 43 fluchtet sowie mit einer Prallplatte 49, die mit dem Stutzen 44 fluchtet.

Man erkennt ohne weiteres, daß durch Verschieben des Schiebers 45, ähnlich wie dies oben zur Rohrpoststation gemäß Fig. 1 und 2 erläutert wurde, verschiedenartige Bedingungen für das Durchfahren und Einfahren realisiert werden können sowie auch für das Auswerfen, wenn statt der Prallplatte 49 ein weiterer Stutzen vorgesehen wird.

Auch bei dieser bekannten Rohrpoststation 40 ist daher die Anzahl der Funktionen systematisch beschränkt.

Fig. 4 zeigt eine weitere bekannte Rohrpoststation 54 mit einem druckdichten Gehäuse 55, in das von oben ein Stutzen 56 mündet. Der Stutzen 56 geht im Gehäuse 55 in ein druckdichtes Gelenk 57 über, an dem ein schwenkbarer Rohrabschnitt 58 befestigt ist. Der Rohrabschnitt 58 kann in Flucht mit einem von drei unteren Stutzen 59, 60 oder 61 gebracht werden, wobei der Stutzen 59 eine Einfahrposition, der Stutzen 60 eine Durchfahrposition und der Stutzen 61 eine Auswerfposition charakterisiert.

An den Stutzen 60 ist ein Saug/Druckgebläse 62 angeschlossen, so daß in Richtung der Doppelpfeile 63 bei Mittelstellung des Rohrabschnittes 58 Büchsen durch die Station 54 in beiden Richtungen hindurchfahren können.

Man kann aus Fig. 4 ohne weiteres erkennen, daß neben dem Durchfahren auch ein Auswerfen einer Büchse entlang des Pfeiles 65 problemlos ist, weil die Büchse unter Schwerkrafteinfluß aus dem Stutzen 61 herausfallen kann. Hingegen ist das Einfahren einer Büchse entlang eines Pfeiles 64 von unten in den Stutzen 59 nicht möglich, weil in der in Fig. 4 eingezeichneten Stellung des Rohrabschnittes 58 bei saugendem Gebläse 62 kein Unterdruck im Stutzen 59 herrschen kann, weil der Stutzen 59 möglichst druckdicht in den fluchtenden Rohrabschnitt 58 übergeht. Der im Inneren des Gehäuses 55 wirkende Unterdruck bei saugendem Gebläse 62 hat daher keine Auswirkung auf den aus den Elementen 59, 58, 56 gebildenten Rohrverlauf.

Aus dieser Erläuterung anhand von Fig. 4 wird deutlich, daß mit keiner der in den Fig. 1 bis 3 gezeigten bekannten Rohrpoststationen 10, 40 und 54 ein Einfahren von Rohrpostbüchsen "von unten" möglich ist, wenn ein Gebläse ebenfalls nur "von unten" wirkt.

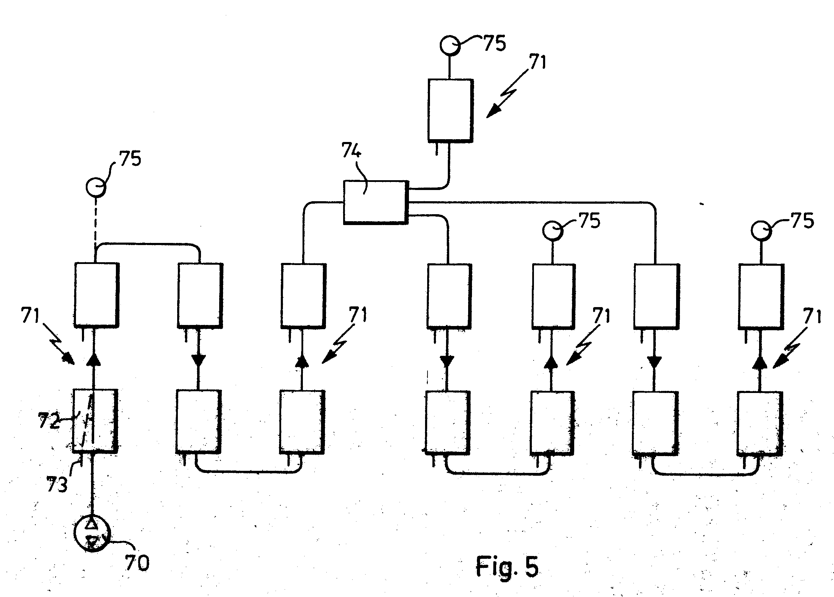

Dies wird weiter anhand von Fig. 5 deutlich, die eine kom- plette Rohrpostanlage zeigt. Die Anlage gemäß Fig. 5 wird von einem gemeinsamen Saug/Druckgebläse 70 versorgt und untergliedert sich in ihrem Verlauf durch ein Gebäude in mehrere "steigende" Äste 71 sowie fallende Äste. Die in den steigenden Ästen 71 angeordneten Rohrpoststationen, von denen eine mit 72 bezeichnet ist, können dann nicht über untere Stutzen 73 zum Einfahren verfügen, weil aus den zu Fig. 4 genannten Gründen ein Einsaugen von Büchsen an dieser Position nicht möglich ist. Dies gilt auch für die hinter einer Weiche 74 weiter verzweigten Äste der Anlage. Es ist vielmehr erforderlich, an den Endpunkten der steigenden Äste 71 jeweils Hilfsgebläse 75 anzuordnen, die eigens zum Einsaugen von Rohrpostbüchsen "von unten" dienen. Es liegt auf der Hand, daß damit erhebliche Nachteile und Steuerungsprobleme verbunden sind, abgesehen von den zusätzlichen Kosten, die solche zusätzlichen Gebläse mit der erforderlichen Steuerung mit sich bringen.

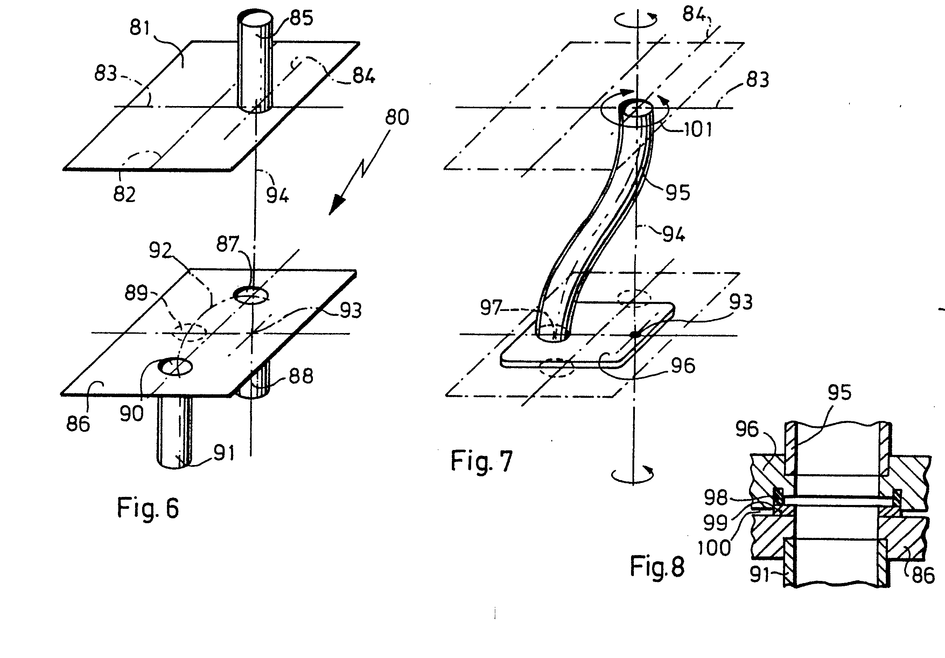

Die Fig. 6 bis 8 zeigen ein Ausführungsbeispiel einer erfindungsgemäßen Rohrpoststation 80. Wie man aus Fig. 6 erkennen kann, verfügt diese wiederum über eine obere Abschlußwand 81, in der man sich zwei zueinander senkrecht verlaufende Achsen 82, 83 vorstellen kann sowie eine zur Achse 82 angeordnete Parallele 84. Im Schnittpunkt der Parallele 84 mit der Achse 83 ist ein Stutzen 85 angeordnet.

In einer unteren Abschlußwand 86 ist in einer Position 87 ein Stutzen 88 angeordnet, während eine Position 89 als Prallplatte dient. In einer weiteren Position 90 befindet sich wiederum ein Stutzen 91. Die Positionen 87, 89, 90 liegen auf einem Kreis 92, dessen Mittelpunkt 93, bezogen auf die untere Abschlußwand 86 dem bereits erwähnten Schnittpunkt der Parallelen 84 mit der Achse 83 entspricht. Der Mittelpunkt 83 definiert zusammen mit dem genannten Schnittpunkt eine Hochachse 94, die koaxial zur Achse des Stutzens 85 liegt.

Fig. 7 zeigt das zum Gehäuse gemäß Fig. 6 erforderliche Drehteil. Man erkennt einen gebogenen Rohrabschnitt 95, dessen oberes Ende mit dem Stutzen 85 fluchtet und in der oberen Abschlußwand 81 in an sich bekannter Weise mit einer druckdichten Drehkupplung gehalten ist, die mit einem Pfeil 101 angedeutet ist.

An seinem unteren Ende läuft der gebogene Rohrabschnitt 95 in eine Platte 96 aus, die um die Hochachse 94 in einer Ebene parallel zur unteren Abschlußwand 86 verschwenkbar ist, wie dies an beiden Enden der Achse 94 durch einen Pfeil angedeutet ist.

In der in Fig. 7 angedeuteten Stellung der Platte 96 fluchtet das untere Ende des gebogenen Rohrabschnittes 95 mit der Position 89, durch Verdrehen der Platte 96 und damit des gebogenen Rohrabschnittes 95 im Uhrzeigersinn oder Gegenuhrzeigersinn kann jedoch auch eine Verbindung des oberen Stutzens 85 mit den Positionen 87 und 90, d.h. den Stutzen 88 und 91 hergestellt werden.

Es kann beispielsweise der Stutzen 88 zum Fahrrohr gehören, so daß durch Verdrehen des Drehteiles aus der Position gemäß Fig. 7 im Uhrzeigersinne eine Durchfahrposition realisiert wird. In der in Fig. 7 eingezeichneten Stellung können von oben ankommende Büchsen abgebremst werden und durch Verdrehen des Drehteiles im Gegenuhrzeigersinne in einen Korb geworfen werden, der unterhalb des Stutzens 91 angeordnet ist.

Die bei 101 angeordnete druckdichte Drehkupplung ist an sich bekannt und bedarf keiner weiteren Erläuterung.

Die Gleitdichtung zwischen der Platte 96 und den jeweiligen Positionen 87 bzw. 89 bzw. 90 kann durch die Dichtung gemäß Fig. 8 realisiert werden, deren weitere Einzelheiten der DE-OS 30 25 935 entnommen werden können.

Diese an sich bekannte Dichtung wird beim Ausführungsbeispiel gemäß Fig. 6 und 7 so eingesetzt, daß die Platte 96 an ihrer Unterseite in einer Ringnut einen elastischen Ring 98 trägt, auf dem ein fester Ring 99 aufliegt. Durch die Elastizität des Ringes 98 wird der feste Ring 99 gegen die untere Abschlußwand 86 gedrückt, und zwar derart, daß zwischen der Unterseite der Platte 96 und der Oberseite der unteren Abschlußwand 86 ein Abstand 100 verbleibt.

Wird nun in der Darstellung von Fig. 8 die Platte 96 seitlich gegenüber der raumfesten unteren Abschlußwand 86 verschoben, gleitet der feste Ring 99 unter dem Druck der Elastizität des Ringes 98 auf der unteren Abschlußwand 86 und gewährleistet so die Dichtigkeit auch beim Verdrehen der Platte 96 in der Darstellung von Fig. 7.

Es sollte jedoch betont werden, daß bei diesem Ausführungsbeispiel infolge der Form der Platte 96, die jeweils nur eine Position überdeckt und der nur an der Platte 96 vorgesehenen Dichtung alle nicht-angeschlossenen Positionen der unteren Abschlußwand 86 offen sind. Dieses Ausführungsbeispiel wird daher in der Fachsprache aufgrund nur begrenzter Funktionsmöglichkeiten als "Weiche" bezeichnet, im Gegensatz zur nachfolgend geschilderten "Station", die alle Funktionen ermöglicht.

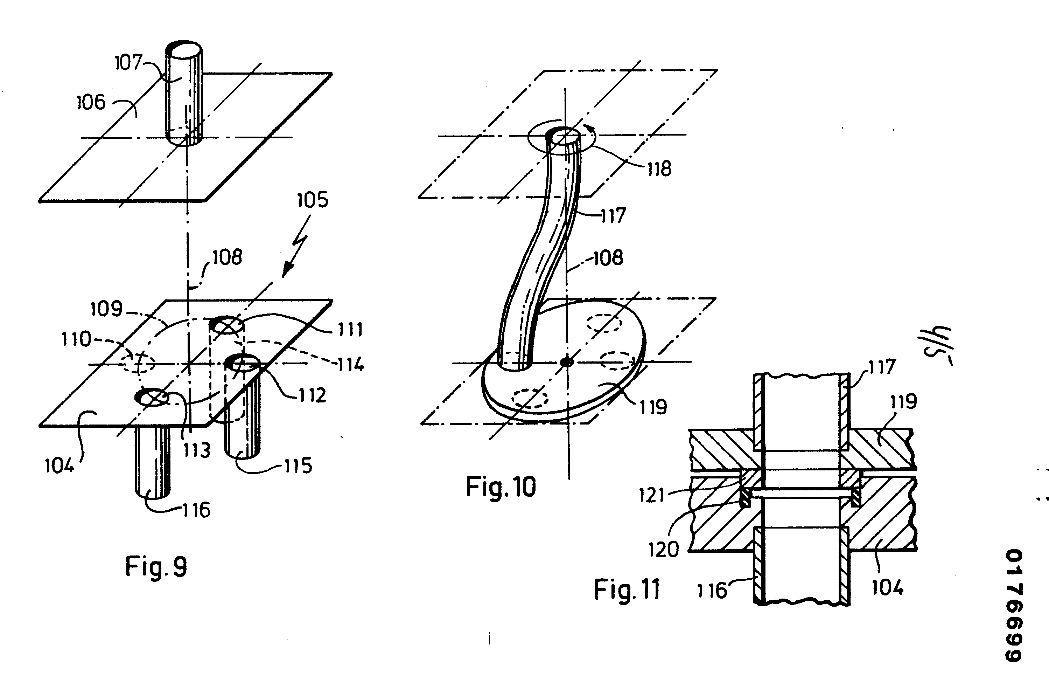

Die Fig. 9 bis 11 zeigen ein weiteres Ausführungsbeispiel einer erfindungsgemäßen Rohrpoststation 105.

Bei diesem Ausführungsbeispiel ist eine obere Abschlußwand 106 zentrisch mit einem einzigen Stutzen 107 versehen, dessen Längsachse eine Hochachse 108 definiert. Auf einer unteren Abschlußwand 104 liegen auf einem Kreis 109 um den Schnittpunkt der Hochachse 108 mit der unteren Abschlußwand 104 Positionen 110, 111, 112 und 113. Die Position 110 stellt z.B. eine Prallplatte dar, während die Positionen 111 bis 113 mit Stutzen 114, 115, 116 versehen sind.

Das in Fig. 10 dargestellte Drehteil weist wiederum einen gebogenen Rohrabschnitt 117 auf, der an seinem oberen Ende in einer Drehkupplung 118 der oberen Abschlußwand 106 gehalten ist und dort mit dem Stutzen 107 fluchtet.

Das untere Ende des gebogenen Rohrabschnittes 117 läuft in eine Platte 119 aus, die ebenfalls um die Hochachse 108 drehbar ist. In der in Fig. 10 eingezeichneten Stellung fluchtet das untere Ende des gebogenen Rohrabschnittes 117 mit der Position 110, d.h. der Prallplatte gemäß Fig. 9.

Man erkennt aus Fig. 11, daß wiederum eine Dichtung zwischen der Platte 119 und der unteren Abschlußwand 104 verwendet wird, wie sie bereits zu Fig. 8 geschildert wurde.

Ein wesentlicher Unterschied bei der Rohrpoststation 105 gemäß den Fig. 9 bis 11 zur Rohrpoststation 80 gemäß Fig. 6 bis 8 besteht jedoch darin, daß bei der Rohrpoststation 105 jede der Positionen 110 bis 113 mit einer Dichtung dieser Art versehen ist, wie dies Fig. 11 beispielhaft für die Position 113 zeigt. Die Funktion der Dichtung mit einem elastischen Ring 120 und einem festen Ring 121 ist zwar ebenso wie diejenige der Dichtung gemäß Fig. 8, beim Ausführungsbeispiel gemäß Fig. 11, es gleitet jedoch die Platte 119 auf den mehreren Dichtungen der Positionen 110 bis 113. Die Platte 119 ist - abgesehen von der vom gebogenen Rohrabschnitt 117 kommenden Durchlaßöffnung - an ihrer Unterseite vollkommen glatt, so daß im Bereich dieser glatten Oberfläche alle Positionen 110 bis 113 druckdicht verschlossen sind, wenn sich der gebogene Rohrabschnitt 117 zwischen den Postionen 110 bis 113 befindet, und bei Ansteuerung einer der Positionen 110 bis 113 durch Verdrehen der Platte 119 ist stets nur diese eine Position 110 bis 113 mit dem gebogenen Rohrabschnitt 117 verbunden, während die übrigen drei druckdicht verschlossen sind.

Beim Ausführungsbeispiel gemäß Fig. 9 bis 11 kann z.B. der Stutzen 114 zum Fahrrohr, der Stutzen 115 zu einer Ausfahrposition und der Stutzen 116 zu einer Einfahrposition gehören. Auch Ausführungsformen mit mehr oder weniger Positionen sind möglich.

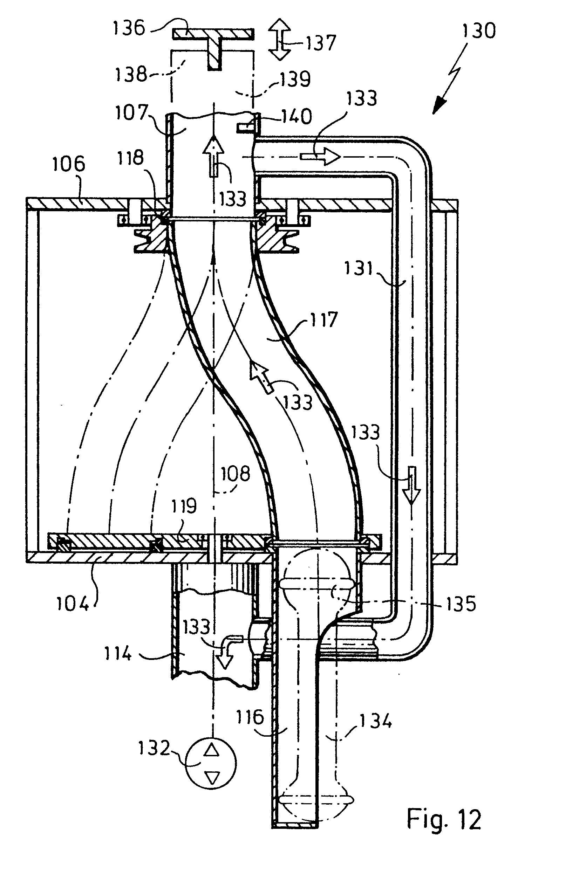

Fig. 12 zeigt schließlich ein Ausführungsbeispiel einer Rohrpoststation 130, die sich die Vorteile des zuvor anhand der Fig. 9 bis 11 geschilderten Ausführungsbeispieles zunutze macht. Es sind insoweit auch dieselben Elemente mit denselben Bezugszeichen versehen.

Man erkennt aus Fig. 12, daß die Rohrpoststation 130 zusätzlich mit einer Bypassleitung 131 versehen ist, die vom Stutzen 107 zum Stutzen 114 führt. Diese Stutzen 107, 114 waren bekanntlich an das Fahrrohr der Rohrpostanlage angeschlossen. Mit 132 ist ein Saug/Druckgebläse angedeutet, das von unten über das Fahrrohr auf den Stutzen 114 wirkt.

Mit Hilfe der Bypassleitung 131 kann nun ein Einfahren "von unten" durch den entsprechenden Stutzen 116 dargestellt werden. Hierzu wird zunächst mittels eines entlang eines Pfeiles 137 verstellbaren Magnetventiles 136 am Ende 138 des Fahrrohres im Fahrrohr ein abgeschlossener Raum 139 gebildet. Im Saugbetrieb des Gebläses 132 stellt sich nun ein Luftströmung durch den Stutzen 114, die Bypassleitung 131, den Stutzen 107, den gebogenen Rohrabschnitt 117 bis in den Stutzen 116 ein, wie er durch Pfeile 133 angedeutet ist. Eine im Stutzen 116 wartende Büchse 134, die am oberen Ende mit einem Dichtring 135 seitlich gegen den Stutzen 116 druckdicht abgeschlossen ist, wird durch den Unterdruck von unten in die Station 130 eingesaugt, was bislang aus den weiter oben ausführlich geschilderten Gründen nicht möglich war.

Durch die weiter oben ausführlich geschilderte Dichtwirkung der Platte 119 ist in der in Fig. 12 eingezeichneten Position der Stutzen 114 und damit das Fahrrohr selbstverständlich nach oben abgedichtet, so daß der gesamte Luftstrom über die Bypassleitung 133 gesaugt wird. Die Büchse 134 hebt sich unter dem Einfluß der Saugwirkung nun an und gleitet in den gebogenen Rohrabschnitt 117, bis der Dichtring 135 oberhalb des Anschlusses der Bypassleitung 131 in den Stutzen 107 zu liegen kommt. An dieser Stelle betätigt die Büchse 134 bzw. der Dichtring 135 einen Rohrschalter 140, der für ein Verdrehen der Platte 119 sorgt, und zwar in der Darstellung von Fig. 9 um 180°, so daß nunmehr das untere Ende des gebogenen Rohrabschnittes 117 wieder mit dem Stutzen 114 fluchtet und die Büchse 134 in das Fahrrohr abgefahren werden kann, und zwar entweder durch Saugen des Gebläses 132 nach unten oder durch Druck nach oben.

Soll eine Büchse ausgeworfen werden, wird die Platte 119 in eine Position gedreht, in der das untere Ende des gebogenen Rohrabschnittes 117 mit der Position 110 in Fig. 9, d.h. der Prallplatte, fluchtet. Die Fahrluft wird in dieser Position ebenfalls über die Bypassleitung 131 umgeleitet, weil ja in der geschilderten Bremsposition der Stutzen 114 durch die Platte 119 wiederum druckdicht verschlossen ist. Die von oben kommende Büchse kann nun je nach wirkendem Sog der Fahrluft ungehindert bis zum Erreichen der Bypassleitung 131 fahren, trifft dann jedoch auf ein Luftpolster, das sich zwischen der Einmündung der Bypassleitung 131 in den Stutzen 107 und der Prallplatte der Position 110 befindet und durch den mehrfach geschilderten druckdichten Abschluß im Bereich der Prallplatte 110 durch die Platte 119 nicht bzw. nur sehr langsam entweichen kann. Die Büchse wird damit über der Prallplatte der Position 110 langsam abgebremst und liegt dann unten auf der Position 110 auf. Durch Drehen der Platte 119 um 180° in der Darstellung von Fig. 9 kann nun der gebogene Rohrabschnitt 117 in Flucht mit dem Ausfahrstutzen 115 gebracht werden, so daß die Büchse nach unten herausfallen kann, und zwar ohne jegliche Beschleunigung durch Treibluft.

Auch bei dieser Funktion der Rohrpoststation 130 ist ein Luftdurchgang in Richtung des Fahrrohres über die Bypassleitung 131 gewährleistet, so daß sich keine Druck-oder Sogspitzen infolge des weiterlaufenden Gebläses 132 bilden können.

In der vorliegenden Beschreibung wurden verschiedene Einzelmerkmale anhand von Ausführungsbeispielen beschrieben, es sei jedoch ausdrücklich betont, daß alle geschilderten Einzelmerkmale jeweils für sich als erfindungswesentlich angesehen werden und auch jeweils für sich genommen verwendet werden können.

Patentanspruch

Rohrpoststation mit einem Gehäuse, das eine obere Abschlußwand (11; 41; 81; 106) und eine untere Abschlußwand (14; 42; 86; 104) aufweist, die jeweils mit Rohrstutzen (12, 13, 16, 23; 85, 88, 91; 114, 115, 116) und/oder Prallplatten (17; 89; 110) versehen sind und mit einem im Gehäuse um eine die obere und die untere Abschlußwand (11; 41; 81; 106; 14; 42; 86; 104) senkrecht schneidende Achse (28; 94; 108) drehbaren Drehteil (25), das einen gebogenen Rohrabschnitt (30; 95; 117) aufweist, mit dem bei Drehung des Drehteiles (25) wahlweise Rohrstutzen (12, 13; 85; 107) der oberen Abschlußwand (11; 41; 81; 106) mit Rohrstutzen (16, 23; 88, 91; 114, 115, 116) und/oder Prallplatten (17; 89; 110) der unteren Abschlußwand (14; 42; 86; 104) verbindbar sind, dadurch gekennzeichnet, daß die obere Abschlußwand (81; 106) mit nur einem koaxial zur Achse (94; 108) angeordneten Rohrstutzen (85; 107) versehen ist, an dem mittels einer Drehkupplung (101; 118) der gebogene Rohrabschnitt (95; 117) des Drehteiles axial fest angeschlossen ist und daß die Rohrstutzen (89, 91; 114, 115, 116) und/oder Prallplatten (89; 110) der unteren Abschlußwand (86; 104) auf einem Kreis (92; 109) angeordnet sind, dessen Mittelpunkt (93) im Schnittpunkt der Achse (94; 108) mit der unteren Abschlußplatte (86; 104) liegt.

Fig. 1

Fig. 2

Fig. 3

Fig. 4

P 4573 F1

Fig. 5

P 4573 EP

Fig.8

Fig.7

Fig.6

Fig. 9

Fig. 10

Fig. 11

0176699

Fig. 12

Europäisches
Patentamt

**EUROPÄISCHER RECHERCHENBERICHT**

| | **EINSCHLÄGIGE DOKUMENTE** | | EP 85109760.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | <u>EP - A1 - 0 057 133</u> (FLUIDELEC)<br> * Gesamt *<br><br> ---- | 1 | B 65 G 51/32 |
| | | | **RECHERCHIERTE SACHGEBIETE (Int Cl 4)**<br><br> B 65 G |

Der vorliegende Recherchenbericht wurde für alle Patentansprüche erstellt

| Recherchenort | Abschlußdatum der Recherche | Prüfer |
|---|---|---|
| WIEN | 19-12-1985 | PISSENBERGER |

**KATEGORIE DER GENANNTEN DOKUMENTEN**
X : von besonderer Bedeutung allein betrachtet
Y : von besonderer Bedeutung im Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82